# EUROPEAN PATENT SPECIFICATION

(11) **EP 1 777 263 B1**
(45) Date of publication and mention of the grant of the patent: **11.11.2009**
(21) Application number: 05767393.1
(22) Date of filing: 27.07.2005
(51) Int. Cl.: C08L 67/04, C08L 101/16

(54) **RESIN COMPOSITION AND MOLDED PRODUCT THEREOF**
HARZZUSAMMENSETZUNG UND FORMTEIL DARAUS
COMPOSITION EN RESINE ET SON PRODUIT EN PATE MOULEE

(30) Priority: 10.08.2004 JP 2004233274
(43) Date of publication of application: 25.04.2007
(73) Proprietor: JSR Corporation, Tokyo 104-8410 (JP)
(72) Inventor: SHIMAKAGE, Masashi c/o JSR CORPORATION, Tokyo 1048410 (JP); ISOBE, Chikara c/o JSR CORPORATION, Tokyo 1048410 (JP)
(74) Representative: TBK-Patent
(86) International application number: PCT/JP2005/013753
(87) International publication number: WO 2006/016480

(56) References cited:
- EP-A1- 1 367 091
- WO-A-01/14621
- WO-A-02/10489
- JP-A- 2002 313 352
- JP-A- 2005 226 054

## Description

The present invention relates to a resin composition which is superior in balance between tensile property or stiffness and impact resistance and in appearance when molded and moreover has biodegradability (disintegratability), as well as to a molded article thereof.

Thermoplastic resins such as polyethylene, polypropylene, polystyrene, polyethylene teraphthalate, polyvinyl chloride and the like have been used widely in packaging materials, food containers, sundries, household electric appliances, etc. These products are thrown away from homes and factories, after use, and are finally disposed at lands for waste disposal or burial or incinerated at incineration facilities.

The use amount of these thermoplastic resins has increased largely in recent years. In connection therewith, the amount of these resins thrown away from homes and factories has increased largely, and the shortage of land for burial has become a serious problem in the vicinities of big cities. Further, when these thermoplastic resins have been disposed in the environment, they remain undecomposed owing to their chemical stability and cause problems such as spoiling of view, pollution of living environment for marine organisms, and the like, thus creating a large social problem. Meanwhile, when the thermoplastic resins are incinerated, the generation of harmful combustion gases Can be prevented by employing high-temperature incineration; however, such incineration may shorten the life of the incinerator used, owing to the combustion heat generated.
Hence, in recent years, there have been developed, from the standpoint of environmental protection, various biodegradable polymers which are decomposed in a natural environment by the action of microorganisms living in water. As such biodegradable polymers but those which can be subjected to melt molding, there are known, for example, polyhydroxybutyrate; polycaprolactone; aliphatic polyesters composed of an aliphatic dicarboxylic acid component (e.g. succinic acid or adipic acid) and a glycol component (e.g. ethylene glycol or butanediol); and polylactic acid.

The polylactic acid, in particular, is produced from lactic acid obtained by fermentation of a starch derived from a plant such as corn, potato or the like. Therefore, the polylactic acid need not depend upon a petroleum source which is limited; as compared with other biodegradable resins, is superior in cost and properties; thus, is promising. The polylactic acid, however, has drawbacks of inferior elongation or flexibility and low impact resistance owing to the stiff molecular structure.
In order to alleviate these drawbacks of polylactic acid, there is disclosed, in, for example, Patent Literature 1, a composition obtained by adding, to a polylactic acid, a plasticizer composed of a polyester type block copolymer between high-melting polymer (polylactic acid) and low-melting polymer. However, this composition was insufficient as well in impact resistance. Improvement in impact resistance is described in Patent Literature 2 by adding, to a polylactic acid, a segmented polyester, a natural rubber or a styrene-butadiene copolymer; in Patent Literature 3, by adding an ethylene-propylene-diene rubber to a polylactic acid; in Patent Literature 4, by adding a modified olefin copolymer to a polylactic acid. However, in general, these materials are low in compatibility with the lactic acid; therefore, although improvement in impact resistance is obtained, non-uniform blending tends to occur and, when the blend is made into a product, the product is inferior in appearance and moreover is not stable in tensile strength. Further, addition of modifier in increased amount was necessary in order to obtain higher impact resistance.
Patent literature 5 relates to agricultural articles comprising an organic polymer, an organic salt comprising transition metals and one or more sterically hindered amine compound. Patent literature 6 describes methods for making a biodegradable thermoplastic composition which may be used in methods to produce multi-component fibrous and non-woven materials, whereby the non-woven material may be produced using thermoplastic compositions which comprise an unreacted mixture of an aliphatic polyester polymer as a continuous phase. Patent literature 7 discloses a bio-disintegradable non-woven material having improved fluid management properties, whereby the non-woven material may be produced using thermoplastic composition which comprise an unreacted mixture of an aliphatic polyester polymer as a continuous phase, polyolefin microfibers as a discontinuous phase and a compatibilizer for the aliphatic polyester polymer and the polyolefin microfibers. Further, patent literature 8 discloses a battery and its manufacturing method, whereby the document discloses an electrolyte vessel material, whereby a water-absorptive high polymer electrolyte material such as ABS resin, SAN resin, NBR rubber etc. may be contained in the electrolyte vessel.

Patent Literature 1: JP-A-1997-137047
Patent Literature 2: Patent No. 2725870
Patent Literature 3: JP-A-2002-37987
Patent Literature 4: JP-A-1997-316310
Patent Literature 5: EP-A-1 367 091
Patent Literature 6: WO-A 02/10489
Patent Literature 7: WO-A 01/14621
Patent Literature 8: JP-A-2002 313352

The present invention has been made in light of the above-mentioned technical problems of the prior art, and aims at providing a polylactic acid-based resin composition which is obtained by blending a particular polymer into a polylactic acid and which is superior in balance between impact resistance and tensile property or stiffness as well as in appearance when molded.

The present inventors made a study in order to achieve the above aim. As a result, it was found that the above-mentioned problems can be alleviated by blending a particular polymer into a polylactic acid as described below. The finding has led to the completion of the present invention.
According to the present invention, there are provided the following resin composition and the following molded article using the composition.
[1] A resin composition comprising:
   a resin component comprising 50 to 100 parts by mass of (i-1) a polylactic acid and 50 to 0 part by mass of (i-2) a polyolefin [the total of (i-1) and (i-2) is 100 parts by mass], and
   1 to 100 parts by mass, per 100 parts by mass of the resin component, of (ii) a functional group-containing, hydrogenated, diene-based polymer containing at least one kind of functional group selected from the group consisting of carboxyl group, acid anhydride group, epoxy group, (meth)acryl group, amino group, alkoxysilyl group, hydroxyl group, isocyanate group and oxazoline group, wherein the functional group-containing, hydrogenated, diene-based polymer is a hydrogenated, diene-based polymer containing the following polymer block B and the following polymer block A and/or the following polymer block C, in which polymer at least 80% of the double bonds of the conjugated diene portion is hydrogenated.
      A: a polymer block containing an aromatic vinyl compound unit in an amount more than 50% by mass.
      B: a polymer block containing a conjugated diene compound unit in an amount more than 50% by mass, wherein the content of 1,2- and 3,4-configurations is 30% to 90%.
      C: a polymer block containing a conjugated diene compound unit in an amount more than 50% by mass, wherein the content of 1,2- and 3,4-configurations is less than 30%.
[2] A resin composition according to [1], wherein the resin component comprises 60 to 100 parts by mass of the polylactic acid (i-1) and 40 to 0 part by mass of the polyolefin (i-2) [the total of (i-1) and (i-2) is 100 parts by mass].
[3] A resin composition according to any of [1] to [2], wherein the functional group of the functional group-containing, hydrogenated, diene-based polymer (ii) includes amino group.
[4] A molded article obtained by molding a resin composition set forth in any of [1] to [3].

The resin composition and molded article of the present invention are superior in balance between tensile property or stiffness and impact resistance as well as in appearance when molded and, moreover, have biodegradability (disintegratability); and, therefore, can be used in various applications such as packaging materials, industrial materials, industrial products, containers, medical tools and the like.

### Best Mode for Carrying Out the Invention

The embodiment of the resin composition according to the present invention is described specifically below.
The resin composition of the present invention is characterized by comprising:
a resin component comprising 50 to 100 parts by mass of (i-1) a polylactic acid as an essential component and 50 to 0 part by mass of (i-2) a polyolefin as an optional component, and
1 to 100 parts by mass, per 100 parts by mass of the resin component, of (ii) a functional group-containing, hydrogenated, diene-based polymer containing at least one kind of functional group selected from the group consisting of carboxyl group, acid anhydride group, epoxy group, (meth)acryl group, amino group, alkoxysilyl group, hydroxyl group, isocyanate group and oxazoline group.
Specific description is made below on each constituent element.

### Polylactic acid (i-1)

The polylactic acid (i-1) used in the present invention [hereinafter referred to also as "component (i-1)"] is a polymer obtained by polymerizing L-lactic acid (L body) and/or D-lactic acid (D body) as a main component. However, a comonomer other than lactic acid may be copolymerized in such an amount that the aim of the present invention is not impaired, preferably in an amount of less than 20 mole %, particularly preferably in an amount of less than 10 mole %.
As such a comonomer, there can be mentioned, for example, polycarboxylic acids, polyalcohols, hydroxycarboxylic acids and lactones. Specifically, there can be used, for example, polycarboxylic acids such as oxalic acid, malonic acid, succinic acid, glutaric acid, adipic acid, azelaic acid, sebacic acid, dodecanedionic acid, fumaric acid, cyclohexanedicarboxylic acid, terephthalic acid, isophthalic acid, phthalic acid, 2,6-naphthalenedicarboxylic acid, 5-sodiumsulfoisophthalic acid, 5-tetrabutylphosphoniumsulfoisophthalic acid and the like; polyalcohols such as ethylene glycol, propylene glycol, butanediol, hepthanediol, hexanediol, octanediol, nonanediol, decanediol, 1,4-cyclohexanedimethanol, neopentyl glycol, glycerine, trimethylolpropane, pentaerythritol, bisphenol A, aromatic polyalcohol obtained by adding ethylene oxide to bisphenol, diethylene glycol, triethylene glycol, polyethylene glycol, polypropylene glycol, polytetramethylene glycol and the like; hydroxycarboxylic acids such as glycolic acid, 3-hydroxybutyric acid, 4-hydroxybutyric acid, 4-hydroxyvaleric acid, 6-hydroxycaproic acid, hydroxybenzoic acid and the like; and lactones such as glycollide, ε-caprolactone glycollide, ε-caprolactone, β-propiolactone, δ-butyrolactone, β- or γ-butyrolactone, pivalolactone, δ-valerolactone and the like.

In order for the polylactic acid (i-1) to have high heat resistance, it is preferred that the lactic acid component has a high optical purity, that is, the lactic acid component contains L-lactic acid or D-lactic acid in an amount of at least 80 mole %, preferably at least 90 mole %, more preferably at least 95 mole %.
In producing the polylactic acid (i-1), there can be used a known process such as direct polymerization from lactic acid, ring-opening polymerization via lactide, or the like.
As to the molecular weight or molecular weight distribution of the polylactic acid (i-1), there is no particular restriction as long as the polylactic acid (i-1) is substantially moldable. However, the weight-average molecular weight is preferably 10,000 or more, more preferably 40,000 or more, particularly preferably 80,000 or more. Here, the weight-average molecular weight refers to a polymethyl methacrylate-reduced, weight-average molecular weight when measured by gel permeation chromatography (GPC) using hexafluoroisopropanol as a solvent.
As to the melting point of the polylactic acid (i-1), there is no particular restriction. However, the melting point is preferably 120°C or more, more preferably 150°C or more. Incidentally, the melting point can be measured by a differential scanning colorimeter (DSC).

### Functional group-containing, hydrogenated, diene-based polymer (ii)

The functional group-containing, hydrogenated, diene-based polymer (ii) used in the present invention [hereinafter, referred to also as "component (ii)"] is such a polymer that a hydrogenated, diene-based polymer wherein a conjugated diene-based polymer obtained by polymerization of a conjugated diene compound and an aromatic vinyl compound is hydrogenated by at least 80%, preferably by at least 90%, more preferably by at least 95% of the double bonds derived from the conjugated diene compound, contains at least one kind of functional group selected from the group consisting of carboxyl group, acid anhydride group, epoxy group, (meth)acryl group, amino group, alkoxysilyl group, hydroxyl group, isocyanate group and oxazoline group. As the component (ii), there can be mentioned, for example, the following polymers.

(a) A polymer obtained by block-copolymerizing a conjugated diene compound or a conjugated diene compound and an aromatic vinyl compound in the presence of an organic alkali metal compound, hydrogenating the resulting polymer, and reacting the hydrogenated polymer with at least one member selected from a (meth)acryloyl group-containing compound represented by the general formula (1) shown later, an epoxy group-containing compound represented by the general formula (2) shown later, and maleic anhydride, in a solution or in a kneader such as extruder or the like.
(b) A polymer obtained by block-copolymerizing a conjugated diene compound or a conjugated diene compound and an aromatic vinyl compound in the presence of an amino group-containing organic alkali metal compound, and then hydrogenating the resulting polymer.
(c) A polymer obtained by block-copolymerizing a conjugated diene compound or a conjugated diene compound and an aromatic vinyl compound with an amino group-containing unsaturated monomer in the presence of an organic alkali metal compound, and then hydrogenating the resulting polymer.
(d) A polymer obtained by block-copolymerizing a conjugated diene compound or a conjugated diene compound and an aromatic vinyl compound in the presence of an organic alkali metal compound, allowing an alkoxysilane compound to act on the active site of the resulting polymer, and then hydrogenating the resulting polymer.
(e) A polymer obtained by block-copolymerizing a conjugated diene compound or a conjugated diene compound and an aromatic vinyl compound in the presence of an organic alkali metal compound, allowing an epoxy compound, a ketone compound or a nitrogen-containing compound other than the compounds represented by the general formulas (3) to (7) shown later, to act on the active site of the resulting polymer, and then hydrogenating the resulting polymer.

As the "conjugated diene compound", there can be mentioned, for example, 1,3-butadiene, isoprene, 2,3-dimethyl-1,3-butadiene, 1,3-pentadiene, 2-methyl-1,3-octadiene, 1,3-hexadiene, 1,3-cyclohexadiene, 4,5-diethyl-1,3-octadiene, 3-butyl-1,3-octadiene, myrcene and chloroprene. Of these, 1,3-butadiene and isoprene are preferred.
As the "aromatic vinyl compound", there can be mentioned, for example, styrene, tert-butylstyrene, α-methylstyrene, p-methylstyrene, p-ethylstyrene, divinylbenzene, 1,1-diphenylstyrene, vinylnaphthalene, vinylanthracene, N,N-diethyl-p-aminoethylstyrene and vinylpyridine. Of these, preferred are α-methylstyrene, p-methylstyrene and tert-butylstyrene; particularly preferred are styrene and tert-butylstyrene.
As the "organic alkali metal compound", there can be mentioned organic lithium compounds, organic sodium compounds, etc. Particularly preferred are organic lithium compounds such as n-butyllithium, sec-butyllithium and the like.
Incidentally, of the polymers (a) to (e), polymers having amino group as a functional group are preferred particularly.

As the (meth)acryloyl group-containing compound and the epoxy compound both used in the above (a), there can be mentioned compounds represented by the following general formulas (1) and (2).

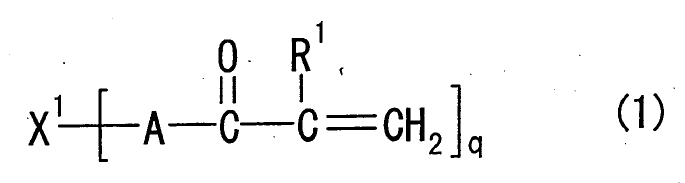

[In the above general formula (1), R¹ is a hydrogen atom or a methyl group; A is a hydrocarbon group of 1 to 20 carbon atoms which may contain hetero-atom, or a single bond; X¹ is an alkoxysilyl group, a hydroxyl group, an amino group, a carboxyl group, an epoxy group, an isocyanate group or an oxazoline group; and q is an integer of 1 to 3 when X¹ is an amino group, and an integer of 1 when X¹ is other group.]

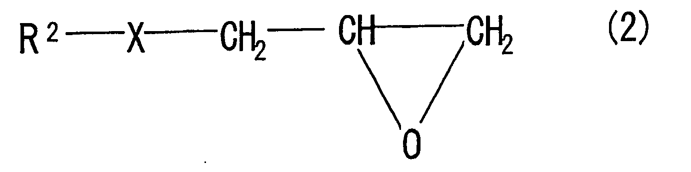

[In the above general formula (2), R² is an alkenyl group of 2 to 18 carbon atoms; and X is a carbonyloxy group, a methyleneoxy group or a phenyleneoxy group.]
The polymer (a) is obtained by block-copolymerizing a conjugated diene compound and an aromatic vinyl compound in the presence of an organic alkali metal compound, hydrogenating the resulting polymer, and reacting the hydrogenated polymer with at least one member selected from a (meth)acryloyl group-containing compound represented by the general formula (1) shown above, an epoxy group-containing compound represented by the general formula (2) shown above, and maleic anhydride, in a solution or in a kneader such as extruder or the like. As specific examples of the polymer, there can be mentioned a maleic anhydride-modified, styrene-ethylene·butylene-styrene block copolymer, a maleic anhydride-modified, styrene-ethylene·propylene-styrene block copolymer, a maleic anhydride-modified, styrene-ethylene·butylene·propylene-styrene block copolymer, an epoxy-modified, styrene-ethylene·butylene-styrene block copolymer, an epoxy-modified, styrene-ethylene·propylene-styrene block copolymer, and an epoxy-modified, styrene-ethylene·butylene·propylene-styrene block copolymer.

As the amino group-containing organic alkali metal compound used in the above (b), there can be mentioned compounds represented by the following general formula (3) or (4).

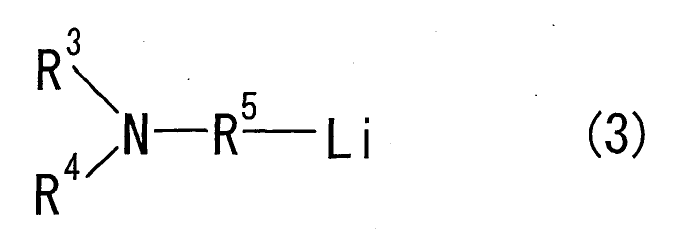

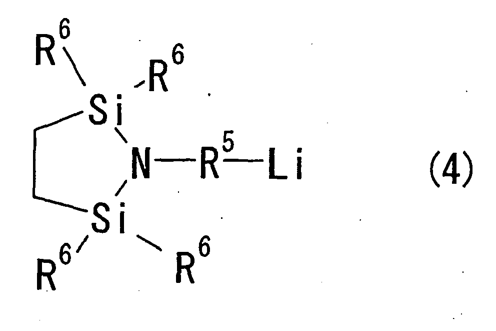

[In the above general formula (3), R³ and R⁴ are each a trialkylsilyl group of 3 to 18 carbon atoms, or either one of R³ and R⁴ is the above trialkylsilyl group and other is an alkyl group of 1 to 20 carbon atoms, an aryl group of 6 to 20 carbon atoms, an aralkyl group of 7 to 20 carbon atoms or an organosiloxy group of 1 to 100 carbon atoms. In the above general formulas (3) and (4), R⁵ is an alkylene group or alkylidene group of 1 to 20 carbon atoms. In the above formula (4), R⁶ is an alkyl group of 1 to 20 carbon atoms, an aryl group of 6 to 20 carbon atoms, an aralkyl group of 7 to 20 carbon atoms, or an organosiloxy group of 1 to 100 carbon atoms.]

As specific examples of the organic alkali metal compound represented by the general formula (3) or (4), there can be mentioned 3-lithio-1-[N,N-bis(trimethylsilyl)]aminopropane (CAS No. 289719-98-8), 2-lithio-1-[N,N-bis(trimethylsilyl)]aminoethane, 3-lithio-2,2-dimethyl-1-[N,N-bis(trimethylsilyl)]aminopropane, 2,2,5,5-tetramethyl-1-(3-lithiopropyl)-1-aza-2,5-disilacyclopentane, 2,2,5,5-tetramethyl-1-(3-lithio-2,2-dimethyl-propyl)-1-aza-2,5-disilacyclopentane, 2,2,5,5-tetramethyl-1-(2-lithioethyl)-1-aza-2,5-disilcyclopentane, 3-lithio-1-[N-(tert-butyl-dimethylsilyl)-N-trimethylsilyl]aminopropane, 3-lithio-1-(N-methyl-N-trimethylsilyl)aminopropane, and 3-lithio-1-(N-ethyl-N-trimethylsilyl)aminopropane.

The amino group-containing unsaturated monomer used in the above (c) is represented by the following general formula (5) or (6).

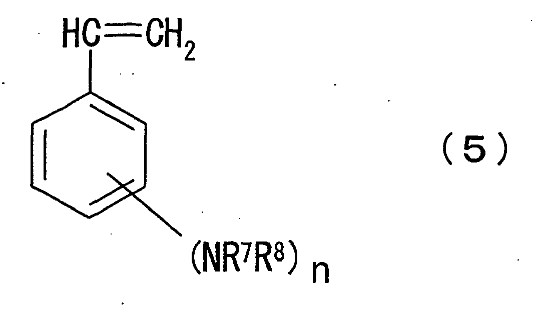

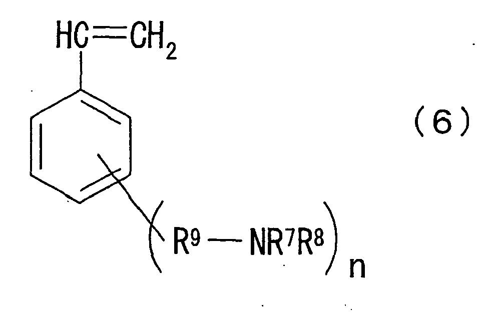

[In the above general formulas (5) and (6), R⁷ and R⁸ are each a trialkylsilyl group of 3 to 18 carbon atoms, or either one of R³ and R⁴ is the above trialkylsilyl group and other is an alkyl group of 1 to 20 carbon atoms, an aryl group of 6 to 20 carbon atoms, an aralkyl group of 7 to 20 carbon atoms or an organosiloxy group of 1 to 100 carbon atoms. In the above general formula (6), R⁹ is an alkylene group or alkylidene group of 1 to 20 carbon atoms. In the above general formulas (5) and (6), n is 1 to 3.]

As specific examples of the unsaturated monomer represented by the general formula (5) or (6), there can be mentioned p-[N,N-bis(trimethylsilyl)amino]styrene, p-[N,N-bis(trimethylsilyl)aminomethyl]styrene, p-{2-[N,N-bis(trimethylsilyl)amino]ethyl}styrene, m-[N,N-bis(trimethylsilyl)amino]styrene, p-(N-methyl-N-trimethylsilylamino)styrene and p-(N-methyl-N-trimethylsilylaminomethyl)styrene.

As the alkoxysilane compound used in the above (d), a compound represented by the following general formula (7) can be mentioned.

R¹⁰₍₄₋ₘ₋ₚ₎Si(OR¹¹)ₘYₚ (7)

[In the above general formula (7), R¹⁰ is an alkyl group of 1 to 20 carbon atoms, an aryl group of 6 to 20 carbon atoms, an aralkyl group of 7 to 20 carbon atoms, or an organosiloxy group of 1 to 100 carbon atoms; when there are a plurality of R¹⁰s, the individual R¹⁰s may be the same or different. R¹¹ is an alkyl group of 1 to 20 carbon atoms, an aryl group of 6 to 20 carbon atoms, or an aralkyl group of 7 to 20 carbon atoms; when there are a plurality of R¹¹s, the individual R¹¹s may be the same or different. Y is a substituent group having N atom-containing polar group; when there are a plurality of Ys, the individual Ys may be the same or different and each Y may be an independent substituent group or may form a cyclic structure. m is 1, 2 or 3. P is an integer of 1, 2 or 3. The sum of m and p is 1 to 4.]

As specific examples of the alkoxysilane compound represented by the general formula (7), there can be mentioned N,N-bis(trimethylsilyl)aminopropyltrimethoxysilane, N,N-bis(trimethylsilyl)aminopropyltriethoxysilane, N,N-bis(trimethylsilyl)aminopropyldimethylethoxysilane, N,N-bis(trimethylsilyl)aminopropyldimethylmethoxysilane, N,N-bis(trimethylsilyl)aminopropylmethyldiethoxysilane, N,N-bis(trimethylsilyl)aminopropylmethyldimethoxysilane, N,N-bis(trimethylsilyl)aminoethyltrimethoxysilane, N,N-bis(trimethylsilyl)aminoethyltriethoxysilane, N,N-bis(trimethylsilyl)aminoethyldimethylethoxysilane, N,N-bis(trimethylsilyl)aminoethyldimethylmethoxysilane, N,N-bis(trimethylsilyl)aminoethylmethyldiethoxysilane, N,N-bis(trimethylsilyl)aminoethylmethyldimethoxysilane, N-methyl-N-trimethylsilylaminopropyltrimethoxysilane, N-methyl-N-trimethylsilylaminopropyltriethoxysilane, N-methyl-N-trimethylsilylaminopropyldimethylethoxysilane, N-methyl-N-trimethylsilylaminopropyldimethylmethoxysilane, N-methyl-N-trimethylsilylaminopropylmethyldiethoxysilane, N-methyl-N-trimethylsilylaminopropylmethyldimethoxysilane, N,N-dimethylaminopropyltrimethoxysilane, N,N-dimethylaminopropyltriethoxysilane, N,N-dimethylaminopropyldimethylethoxysilane, N,N-dimethylaminopropyldimethylmethoxysilane, N,N-dimethylaminopropylmethyldiethoxysilane, N,N-dimethylaminopropylmethyldimethoxysilane, N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(1,3-dimethylbutylidene)-3-(trimethoxysilyl)-1-propaneamine, N-(1-methylethylidene)-3-(trimethoxysilyl)-1-propaneamine, N-ethylidene-3-(trimethoxysilyl)-1-propaneamine, N-(1-methylpropylidene)-3-(trimethoxysilyl)-1-propaneamine, N-(4-N,N-dimethylaminobenzylidene)-3-(trimethoxysilyl)-1-propaneamine, N-(1,3-dimethylbutylidene)-3-(methyldimethoxysilyl)-1-propaneamine, N-(1-methylethylidene)-3-(methyldimethoxysilyl)-1-propaneamine, N-ethylidene-3-(methyldimethoxysilyl)-1-propaneamine, N-(1-methylpropylidene)-3-(methyldimethoxysilyl)-1-propaneamine, N-(4-N,N-dimethylaminobenzylidene)-3-(methyldimethoxysilyl)-1-propaneamine, N-(1,3-dimethylbutylidene)-3-(methyldiethoxysilyl)-1-propaneamine, N-(1-methylethylidene)-3-(methyldiethoxysilyl)-1-propaneamine, N-ethylidene-3-(methyldiethoxysilyl)-1-propaneamine, N-(1-methylpropylidene)-3-methyldiethoxysilyl)-1-propaneamine, N-(4-N,N-dimethylaminobenzylidene)-3-(methyldiethoxysilyl)-1-propaneamine, N-(1,3-dimethylbutylidene)-3-(dimethylmethoxysilyl)-1-propaneamine, N-(1-methylethylidene)-3-(dimethylmethoxysilyl)-1-propaneamine, N-ethylidene-3-(dimethylmethoxysilyl)-1-propaneamine, N-(1-methylpropylidene)-3-(dimethylmethoxysilyl)-1-propaneamine, N-(4-N,N-dimethylaminobenzylidene)-3-(dimethylmethoxysilyl)-1-propaneamine, N-(1,3-dimethylbutylidene)-3-(dimethylethoxysilyl)-1-propaneamine, N-(1-methylethylidene)-3-(dimethylethoxysilyl)-1-propaneamine, N-ethylidene-3-(dimethylethoxysilyl)-1-propaneamine,N-(1-methylpropylidene)-3-(dimethylethoxysilyl)-1-propaneamine, and N-(4-N,N-dimethylaminobenzylidene)-3-(dimethylethoxysilyl)-1-propaneamine.

As the epoxy compound used in the polymer (e), there can be mentioned ethylene oxide, propylene oxide, etc.; as the ketone compound, there can be mentioned acetone, benzophenone, etc; as the nitrogen-containing compound other than the compounds of the general formulas (3) to (7), there can be mentioned compounds represented by the following general formula (8).

R¹²R¹³C=N-Z (8)

[In the general formula (8), R¹² and R¹³ are each independently a hydrogen atom, an alkyl group of 1 to 20 carbon atoms, an aryl group of 6 to 20 carbon atoms, an aralkyl group of 7 to 20 carbon atoms, or an organosiloxy group of 1 to 100 carbon atoms. Z is a hydrogen atom, a trialkylsilyl group of 3 to 18 carbon atoms, an alkyl group of 1 to 20 carbon atoms, an aryl group of 6 to 20 carbon atoms, an aralkyl group of 7 to 20 carbon atoms, or an organosiloxy group of 1 to 100 carbon atoms.] As specific examples thereof, there can be mentioned N-benzylidenemethylamine, N-benzylideneethylamine, N-benzylidenebutylamine and N-benzylideneaniline.

In the functional group-containing, hydrogenated, diene-based polymer, the proportions of the content of the aromatic vinyl compound unit and the content of the conjugated diene compound unit are 0/100 to 80/20, preferably 3/97 to 60/40 in terms of mass ratio.

The functional group-containing, hydrogenated, diene-based polymer can be constituted by polymer blocks (A), (B) and (C) each comprising a component illustrated below; and there is preferably used a polymer having at least one kind of polymer block (B), and at least one kind of polymer block (A) and/or at least one kind of polymer block (C).
(A): a polymer block containing an aromatic vinyl compound in an amount more than 50% by mass.
(B): a polymer block containing a conjugated diene compound in an amount more than 50% by mass, wherein the content of 1,2- and 3,4-configurations is 30% to 90%.
(C): a polymer block containing a conjugated diene compound in an amount more than 50% by mass, wherein the content of 1,2- and 3,4-configurations is less than 30%.
When the polymer blocks (A), (B) and (C) are each a copolymer block comprising two or more kinds of compounds, the polymer obtained may be a so-called taper type in which the content of aromatic vinyl compound or conjugated diene compound in copolymer block varies continuously, or a random type, depending upon the application purpose of the resin composition obtained from the polymer.

As examples of the block copolymer comprising two or more polymer blocks selected from the polymer blocks (A), (B) and (C), there can be mentioned (A)-(B), (A)-(C), [(A)-(B)]ₓ-W, [(A)-(C)]ₓ-W, (A)-(B)-(C), (C)-(B)-(C), (A)-(B)-(A), (A)-(B)-(A), [(A)-(B)-(C)]ₓ-W, [(A)-(B)-(A)]ₓ-W, [(A)-(C)-(A)]ₓ-W, (A)-(B)-(A)-(B), (B)-(-A)-(B)-(A), (A)-(C)-(A)-(C), (C)-(A)-(C)-(A), [(A)-(B)-(A)-(B)]ₓ-W, (A)-(B)-(A)-(B)-(A), [(A)-(B)-(A)-(B)-(A)]ₓ-W, [(B)-(A)]ₓ-W, [(C)-(A)]ₓ-W, (B)-(A)-(B)-(C), (B)-(A)-(B)-(A), (B)-(A)-(C)-(A), and [(C)-(A)-(B)-(C)]ₓ-W, wherein x ≧ 2 and W is a residue of a coupling agent. When the hydrogenated, diene-based polymer is prepared in pellets, it is preferred that the terminal portion of the polymer contains at least one polymer block (A) and/or polymer block (C).

As the coupling agent, there can be mentioned, for example, halogen compounds, epoxy compounds, carbonyl compounds and polyvinyl compounds. As specific examples of the coupling agent, there can be mentioned methyldichlorosilane, methyltrichlorosilane, butyltrichlorosilane, tetrachlorosilane, dibromoethane, epoxidized soybean oil, divinylbenzene, tetrachlorotin, butyltrichlorotin, tetrachlorogermanium, bis(trichlorosilyl)ethane, diethyl adipate, dimethyl adipate, dimethyl terephthalate, diethyl terephthalate and polyisocyanate.

As to the molecular weight of the functional group-containing, hydrogenated, diene-based polymer, there is no particular restriction. However, the molecular weight is 30,000 to 2,000,000, preferably 40,000 to 1,000,000, further preferably 50,000 to 500,000 in terms of polystyrene-reduced weight-average molecular weight as measured by GPC.
Incidentally, the number of functional groups in the functional group-containing, hydrogenated, diene-based polymer is, on an average, 0.01 to 100, particularly preferably 0.1 to 10. The functional group-containing, hydrogenated, diene-based polymer may contain a hydrogenated, diene-based polymer containing no functional group.

The resin composition of the present invention comprises:
100 parts by mass of a resin component comprising the polylactic acid (i-1) as a main compound and a polyolefin (i-2) as an optional compound (the sum of (i-1) and (i-2) is 100 parts by mass), and
1 to 100 parts by mass, preferably 2 to 50 parts by mass, particularly preferably 3 to 30 parts by mass of the functional group-containing, hydrogenated, diene-based polymer (ii) containing at least one kind of functional group selected from the group consisting of carboxyl group, acid anhydride group, epoxy group, (meth)acryloyl group, amino group, alkoxysilyl group, hydroxyl group, isocyanate group and oxazoline group. When the content of the functional group-containing, hydrogenated, diene-based polymer is less than 1 part by mass, the resulting resin composition is low in impact resistance; when the content is more than 100 parts by mass, the resulting composition is low in stiffness and tensile strength and is inferior in appearance when molded.

### Polyolefin (i-2)

The polyolefin (i-2) used as necessary in the present invention [it is hereinafter referred to also as "component (i-2)"] is a polymer obtained by polymerizing ethylene and/or at least one kind of α-olefin by the high-pressure method or the low-pressure method. As examples of the α-olefin, there can be mentioned α-olefins of 3 to 12 carbon atoms, such as propene (hereinafter referred to as "propylene"), 1-butene, 1-pentene, 3-methyl-1-butene, 1-hexene, 3-methyl-1-pentene, 4-methyl-1-pentene, 3-ethyl-1-pentene, 1-octene, 1-decene, 1-undecene and the like.

As examples of the polyolefin (i-2), there can be mentioned polyethylene type resins, polyproylene type resins, polybutene type resins and methylpentene type resins. These resins can be used in one kind or in combination of two or more kinds. As the polyethylene type resins, there can be mentioned, for example, a low-density polyethylene, a medium-density polyethylene, a high-density polyethylene, a linear, low-density polyethylene, an ethylene-propylene copolymer, an ethylene-(meth)acrylic acid copolymer, an ethylene-(meth)acrylic acid ester copolymer, and an ethylene-vinyl acetate copolymer. As the polypropylene type resin, there can be mentioned, for example, a homopolypropylene, a block polypropylene, a random polypropylene, a propylene-α-olefin copolymer, a propylene-ethylene copolymer, a propylene-butene copolymer, and a propylene-ethylene-butene copolymer.
Of these polyolefins, polyethylene type resins and polypropylene type resins are preferred.

The melt flow rate (MFR) of the polyethylene type resins is preferably 0.01 to 100 g/10 min, more preferably 0.1 to 100 g/10 min when measured at 190°C at a load of 21.2 N according to ASTM D 1238. With an MFR of more than 100 g/10 min, a reduction in strength arises; with an MFR of less than 0.01 g/10 min, the kneadability, extrudability, etc. of resin composition is insufficient.
A preferred melt flow rate (MFR) of the polypropylene type resins differs depending upon the molding method used. When they are used in extrusion molding, the MFR is 0.001 to 100 g/10 min, preferably 0.005 to 50 g/10 min, more preferably 0.01 to 40 g/10 min as measured at 230°C at a load of 21.2 N according to ASTM D 1238. When they are used in injection molding, the MFR is 0.1 to 1,000 g/10 min, preferably 0.5 to 500 g/10 min, more preferably 1 to 300 g/10 min.

By mixing the polyolefin (i-2) into the polylactic acid (i-1) which is relatively expensive, there can be obtained a resin composition which is less expensive and has impact resistance. When the polyolefin is mixed, the proportion of the polylactic acid (i-1) is 50 to 100 parts by mass and the proportion of the polyolefin (i-2) is 50 to 0 parts by mass [the sum of the (i-1) and the (i-2) is 100 parts by mass]; preferably, the proportion of the polylactic acid (i-1) is 60 to 100 parts by mass and the proportion of the polyolefin (i-2) is 40 to 0 parts by mass [the sum of the (i-1) and the (i-2) is 100 parts by mass]. When the proportion of the (i-2) component is too large, a reduction in stiffness (bending modulus) arises and biodegradability (disintegratability) (which is a feature of polylactic acid) is impaired.

The resin composition of the present invention is produced easily by melt-mixing the (i-1) component and the (ii) component, or the (i-1) component, the (i-2) component and the (ii) component. As to the mixing method or the mixing apparatus, there is no particular restriction; however, a twin-screw extruder of high kneading efficiency, a Banbury mixer, etc. are preferred, and an apparatus enabling continuous operation is advantageous industrially and is preferred. The temperature of melt-mixing is preferably 150 to 250°C.
In the resin composition of the present invention, additives can be added to the above-mentioned components as long as the properties thereof are not impaired. As the additives, there can be mentioned, for example, a stabilizer, an anti-oxidant, a releasing agent, an ultraviolet absorber, a filler, a lubricant, a plasticizer, a color-protecting agent, a coloring agent, a germicidal agent, a nucleating agent and an anti-static agent.

The stabilizer can be added for higher hydrolysis resistance and, for example, an epoxy type stabilizer is used. The epoxy type stabilizer is preferably 3,4-epoxycyclohexylmethyl-3,4-epoxycyclohexanecarboxylate. As the anti-oxidant, there can be mentioned a phosphorus-based stabilizer, a hindered phenol type anti-oxidant, an epoxy type stabilizer and a sulfur-based stabilizer.

As the nucleating agent, there can be mentioned, for example, sodium 2,2'-methylenebis(4,6-di-tert-butylphenyl) phosphate, sodium bis(4-tert-butylphenyl) phosphate, bis(p-methylbenzylidene)sorbitol, alkyl-substituted dibenzylidenesorbitol and bis (p-ethylbenzylidene) sorbitol.
As the anti-static agent, there can be mentioned, for example, fatty acid salts, higher alcohol sulfate salts, sulfuric acid salts of aliphatic amines and aliphatic amides, aliphatic alcohol phosphate salts, naphthalenesulfonic acid salts, aliphatic amine salts, quaternary ammonium salts, alkyl pyridinium salts, polyoxyethylene alkyl ethers, polyoxyethylene alkylphenol ethers, polyoxyethylene alkyl esters, sorbitan alkyl esters, polyoxyethylenesorbitan alkyl esters and imidazoline derivatives.

The thus-obtained thermoplastic resin composition can be molded by a known method such as injection molding, extrusion molding, inflation molding, rotary molding, press molding, hollow casting, calendering, blow molding or the like.

The resin composition of the present invention can be suitably used in various applications such as containers for food packaging, various trays, sheet, tube, film, fiber, laminate, coating material, connector or printed substrate, electric or electronic parts (e.g. cover for motor and cover for electric bulb socket), casings for OA appliances (e.g. computer) or household electric appliances, injection coil cover, precision parts, construction materials for civil engineering and residence (e.g. window frame), household sundries (e.g. hanger, chair, garbage bag and tableware), various industrial parts, medical tools and the like.

### Examples

The present invention is described below more specifically by way of Examples. However, the present invention is in no way restricted by these Examples.
Incidentally, in the following Examples and Comparative Examples, parts and % are based on mass unless otherwise specified. Further, in the Examples and Comparative Examples, various components were as follows and various measurements were made as follows.
[1] Various components
   Component (i-1):
      Polylactic acid:
         melting point = 150°, a product of Cargill Dow LLC
   Component (i-2):
      Linear, low-density polyethylene (LLDPE):
         "UF 440" (trade name), a product of Nihon Polychem Sha
      Homopolypropylene (PP):
         "K 1800" (trade name), a product of Nihon Polychem Sha
   Component (ii):
      Functional group-containing, hydrogenated, diene-based polymers (polymer-1 to polymer-6) obtained in the following Production Examples
   Other components
      Maleic anhydride-modified ethylene-propylene rubber (MAH-EP):
         "T 7761" (trade name), a product of JSR Hydrogenated, styrene-butadiene block copolymer (SEBS):
            "DYNARON 8601 P" (trade name), a product of JSR

[2] Methods for evaluation of functional group-containing, hydrogenated, diene-based polymers Properties of each functional group-containing, hydrogenated, diene-based polymer were measured by the following methods.
   (1) Vinyl configuration content (1,2- and 3,4- configuration contents) Infrared analysis was used and calculation was made by the Hampton method.
   (2) Bound styrene content A carbon tetrachloride solution was used and calculation was made from the ¹H-NMR (270 MHz) spectrum obtained.
   (3) Weight-average molecular weight Determined as a polystyrene-reduced value, using a gel permeation chromatograph (GPC) (HLC-8120, a product of Tosoh Corporation).
   (4) MFR (melt flow rate) Measured at 230°C at a load of 21.2 N according to JIS K 7210.
   (5) Functional group content (number/polymer)
      This is a proportion of functional groups in polymer and is expressed by the following formula.
      Functional group content = (number of functional groups)/polymer (one molecular chain)
      It was determined quantitatively by the amine titration method described in Analy. Chem. 564 (1952). That is, a functional group-containing, hydrogenated, diene-based polymer was purified and then dissolved in an organic solvent; and the solution was titrated with HclO₄/CH₃COOH using methyl violet as an indicator, until the color of the solution turned from purple to sky blue.
   (6) Hydrogenation ratio of conjugated diene
      Carbon tetrachloride was used as a solvent and calculation was made from the ¹H-NMR (270 MHz) spectrum obtained.

### Production Example 1 [Production of functional group-containing, hydrogenated, diene-based polymer (polymer-1)]

In a nitrogen-purged reactor having an internal volume of 50 liters were placed cyclohexane (25 kg), tetrahydrofuran (750 g), styrene (2,000 g) and 3-lithio-1-N,N-bis(trimethylsilyl)aminopropane (14.4 g). Adiabatic polymerization was conducted from 50°C. After the completion of the reaction, the system temperature was lowered to 20°C, 1,3-butadiene (2,500 g) was added, and adiabatic polymerization was conducted. 30 minutes later, styrene (500 g) was added and polymerization was conducted. After the polymerization was over, hydrogen gas was fed at a pressure of 0.4 Mpa-G and stirring was made for 20 minutes, whereby the hydrogen was reacted with polymer terminal lithium (which was a living anion) to form lithium hydride. The reaction mixture was maintained at 90°C and a hydrogenation reaction was conducted using titanocene dichloride. At the timing when hydrogen absorption was over, the reaction mixture was returned to normal temperature and normal pressure, withdrawn from the reactor, and poured into water with stirring. Then, steam distillation was conducted to remove the solvent, whereby was obtained a functional group-containing, hydrogenated, diene-based polymer having a A-B-A type structure (a polymer-1).
The functional group-containing, hydrogenated, diene-based polymer obtained had a hydrogenation ratio of 98%, a weight-average molecular weight of 100,000, a bound styrene content (of polymer before hydrogenation) of 50% by weight, a vinyl configuration content (of polybutadiene block) of 80%, an MFR of 2.7 g/10 min, and a functional group content of 1.00/polymer.

### Production Example 2 [Production of functional group-containing, hydrogenated, diene-based polymer (polymer-2)]

In a nitrogen-purged reactor having an internal volume of 50 liters were placed cyclohexane (25 kg), tetrahydrofuran (750 g), styrene (500 g) and 2,2,5,5-tetramethyl-1-(3-lithiopropyl)-1-aza-2,5-disilacyclopentane (14.5 g). Adiabatic polymerization was conducted from 50°C (the temperature of polymerization start). After the completion of the reaction, the system temperature was lowered to 20°C, 1,3-butadiene (4,250 g) was added, and adiabatic polymerization was conducted. 30 minutes later, styrene (250 g) was added and polymerization was conducted. After the polymerization was over, a hydrogenation reaction and solvent removal were conducted in the same manner as in Production Example 1, whereby was obtained a functional group-containing, hydrogenated, diene-based polymer having a A-B-A type structure (a polymer-2).
The functional group-containing, hydrogenated, diene-based polymer obtained had a hydrogenation ratio of 97%, a weight-average molecular weight of 120,000, a bound styrene content (of polymer before hydrogenation) of 15% by weight, a vinyl configuration content (of polybutadiene block) of 78%, an MFR of 22.1 g/10 min, and a functional group content of 0.98/polymer.

### Production Example 3 [Production of functional group-containing, hydrogenated, diene-based polymer (polymer-3)]

In a nitrogen-purged reactor having an internal volume of 50 liters were placed cyclohexane (25 kg), tetrahydrofuran (750 g), styrene (500 g) and n-butyllithium (4.5 g). Adiabatic polymerization was conducted from 50°C. After the completion of the reaction, the system temperature was lowered to 20°C, 1,3-butadiene (4,250 g) was added, and adiabatic polymerization was conducted. 30 minutes later, styrene (250 g) was added and polymerization was conducted. 4-{2-[N,N-bis(trimethylsilyl)amino]ethyl}styrene (37 g) was added and reacted with the active site of the resulting polymer for 30 minutes. After the reaction was over, a hydrogenation reaction and solvent removal were conducted in the same manner as in Production Example 1, whereby was obtained a functional group-containing, hydrogenated, diene-based polymer having a A-B-A type structure (a polymer-3). The functional group-containing, hydrogenated, diene-based polymer obtained had a hydrogenation ratio of 99%, a weight-average molecular weight of 120,000, a bound styrene content (of polymer before hydrogenation) of 15% by weight, a vinyl configuration content (of polybutadiene block) of 79%, an MFR of 17.4 g/10 min, and a functional group content of 1.77/polymer.

### Production Example 4 [Production of functional group-containing, hydrogenated, diene-based polymer (polymer-4)]

In a nitrogen-purged reactor having an internal volume of 50 liters were placed deaerated and dehydrated cyclohexane (30 kg) and 1,3-butadiene (1,000 g). Then, tetrahydrofuran (1.5 g) and n-butyllithium (4 g) were added. Adiabatic polymerization was conducted from 60°C for 40 minutes. After the completion of the reaction, the temperature of the reaction mixture was lowered to 30°C, and tetrahydrofuran (60 g) and 1,3-butadiene (3,750 g) were added, followed by adiabatic polymerization. When the conversion reached nearly 100%, styrene (250 g) was added and polymerization was conducted to form a diene-based polymer. Then, N-bis(trimethylsilyl)aminopropylmethyldiethoxysilane (17 g) was added and reacted with the active site of the diene-based polymer for 30 minutes. After the completion of the reaction, a hydrogenation reaction and solvent removal were conducted in the same manner as in Production Example 1, whereby was obtained a functional group-containing, hydrogenated, diene-based polymer of C-B-A type structure (a polymer-4).
The functional group-containing, hydrogenated, diene-based polymer obtained had a hydrogenation ratio of 99%, a weight-average molecular weight of 140,000, a bound styrene content (of polymer before hydrogenation) of 5% by weight, a vinyl configuration content (of polybutadiene block at first polymerization stage) of 15%, a vinyl configuration content (of polybutadiene block at second polymerization stage) of 42%, an MFR of 2.4 g/10 min, and a functional group content of 0.89/polymer.

### Production Example 5 [Production of functional group-containing, hydrogenated, diene-based polymer (polymer-5)]

In a nitrogen-purged reactor having an internal volume of 50 liters were placed cyclohexane (25 kg), tetrahydrofuran (1.25 g), 1,3-butadiene (1,500 g) and n-butyllithium (4.3 g). Adiabatic polymerization was conducted from 70°C. After the completion of the reaction, the system temperature was lowered to 20°C, and tetrahydrofuran (750 g) and 1,3-butadiene (3,500 g) were added, followed by adiabatic polymerization. Then, to the system was added N,N-bis(trimethylsilyl)aminopropyltrimethoxysilane (8 g), followed by a reaction for 30 minutes. After the completion of the reaction, a hydrogenation reaction and solvent removal were conducted in the same manner as in Production Example 1, whereby was obtained a functional group-containing, hydrogenated, diene-based polymer of C-B-C type structure (a polymer-5).
The functional group-containing, hydrogenated, diene-based polymer obtained had a hydrogenation ratio of 97%, a weight-average molecular weight of 300,000, a vinyl configuration content (of polybutadiene block at first polymerization stage, of polymer before hydrogenation) of 14%, a vinyl configuration content (of polybutadiene block at second polymerization stage) of 80%, an MFR of 0.7 g/10 min, and a functional group content of 0.83/polymer.

### Production Example 6 [Production of functional group-containing, hydrogenated, diene-based polymer (polymer-6)]

In a nitrogen-purged reactor having an internal volume of 50 liters were placed cyclohexane (25 kg), tetrahydrofuran (750 g), styrene (500 g) and n-butyllithium (4.2 g). Adiabatic polymerization was conducted from 50°C. After the completion of the reaction, the system temperature was lowered to 20°C and 1,3-butadiene (4,250 g) was added, followed by adiabatic polymerization. 30 minutes later, styrene (250 g) was added, followed by polymerization. Benzylideneethylamine (7.8 g) was added and reacted with the active site of the formed polymer for 30 minutes. The temperature of the reaction mixture was adjusted to 80°C or more and hydrogen was introduced into the system. Then, a Pd-BaSO₄ catalyst (13 g) was added and a reaction was conducted for 1 hour with a hydrogen pressure maintained at 2.0 Mpa. After the reaction, the reaction mixture was returned to normal temperature and normal pressure, withdrawn from the reactor, poured into water with stirring, and subjected to steam distillation for solvent removal, whereby was obtained a functional group-containing, hydrogenated, diene-based polymer of A-B-A type structure (a polymer-6).
The functional group-containing, hydrogenated, diene-based polymer obtained had a hydrogenation ratio of 98%, a weight-average molecular weight of 130,000, a bound styrene content (of polymer before hydrogenation) of 15% by weight, a vinyl configuration content (of polybutadiene block) of 80%, an MFR of 4.4 g/10 min, and a functional group content of 0.84/polymer.

### [3] Methods for evaluation of resin composition

### (1) Physical properties:

Tensile tests were conducted according to JIS K 7113; impact strength was measured according to JIS K 7110 (Izod test); and bending modulus (a yardstick for stiffness) was measured according to ASTM D 790.

### (2) Biodegradability:

A test piece was buried in an activated sludge for 12 months, and a ratio of tensile strength after burial to tensile strength before burial was measured. When the ratio was 100 to 75% relative to the tensile strength before burial, the biodegradability of the test piece was low and reported as X; when the ratio was 75 to 50%, the biodegradability was reported as △; and the ratio was 50% or less, the biodegradability was high and reported as ○.

### (3) Appearance when molded:

A molded test piece was observed visually. When there was no weld line, the appearance was reported as ○ and, when there was a clear weld line, the appearance was reported as X.

### Example 1

A polylactic acid (i-1) and a functional group-containing, hydrogenated, diene-based polymer (ii) (the polymer-1) were each independently placed in a vacuum drier for sufficient reduction in moisture content. Then, they were kneaded at a ratio of (i-1)/(ii) = 100/30 at 200°C in a 40 mm (diameter) extruder (a product of Ikegai Sha) to form a strand. The strand was cut by a pelletizer to obtain pellets. The pellets were dried in a vacuum drier and then molded at 200°C by an injection molder to obtain a test piece. The test piece was measured for various items. The results are shown in Table 1.

### Examples 2 to 14 and Comparative examples 1 to 5

An operation was conducted in the same manner as in Example 1 except that the mixing proportions of individual components were changed as shown in Table 1. The results are shown in Table 1 and Table 2.

**Table 1**

| | Examples | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| Resin components | | | | | | | | | | | | | | |
| Polylactic acid (parts by mass) | 100 | 100 | 100 | 100 | 100 | 100 | 100 | 100 | 65 | 80 | 90 | 80 | 55 | 80 |
| PP (parts by mass) | | | | | | | | | 35 | 20 | 10 | | 45 | 20 |
| LLDPE (parts by mass) | | | | | | | | | | | | 20 | | |
| Polymer-1 (parts by mass) | 10 | | | | | | | | | | | | | |
| Polymer-2 (parts by mass) | | 10 | | | | | | | | | | | | |
| Polymer-3 (parts by mass) | | | 10 | 30 | 50 | | | | 10 | 10 | 10 | | 10 | 5 |
| Polymer-4 (parts by mass) | | | | | | 10 | | | | | | 10 | | |
| Polymer-5 (parts by mass) | | | | | | | 10 | | | | | | | |
| Polymer-6 (parts by mass) | | | | | | | | 10 | | | | | | |
| MAH-EP (parts by mass) | | | | | | | | | | | | | | |
| SEBS (parts by mass) | | | | | | | | | | | | | | |
| Physical properties | | | | | | | | | | | | | | |
| Tensile test | | | | | | | | | | | | | | |
| Tensile strength (Mpa) | 51 | 49 | 50 | 36 | 33 | 52 | 52 | 49 | 34 | 42 | 47 | 38 | 24 | 37 |
| Elongation at break (%) | 11 | 18 | 19 | 22 | 37 | 23 | 17 | 18 | 21 | 14 | 12 | 15 | 23 | 10 |
| Impact strength (kJ/m²) | 4 | 3.7 | 4.6 | 3.1 | 2 | 4.4 | 4.8 | 4.4 | 4.7 | 4.1 | 3.7 | 3.2 | 4.6 | 3.0 |
| Bending modulus (Mpa) | 3160 | 2600 | 2650 | 2010 | 1750 | 2970 | 2750 | 2650 | 1650 | 2150 | 2420 | 2250 | 1410 | 2490 |
| Appearance when molded | ○ | ○ | ○ | ○ | ○ | ○ | ○ | ○ | ○ | ○ | ○ | ○ | ○ | ○ |
| Biodegradability | ○ | ○ | ○ | ○ | △ | ○ | ○ | ○ | △ | ○ | ○ | ○ | △ | ○ |

**Table 2**

| | Comparative Examples | | | | |
|---|---|---|---|---|---|
| | 1 | 2 | 3 | 4 | 5 |
| Resin components | | | | | |
| Polylactic acid (parts by mass) | 100 | 100 | 100 | 100 | 80 |
| PP (parts by mass) | | | | | 20 |
| LLDPE (parts by mass) | | | | | |
| Polymer-1 (parts by mass) | | | | 120 | |
| Polymer-2 (parts by mass) | | | | | |
| Polymer-3 (parts by mass) | | | | | |
| Polymer-4 (parts by mass) | | | | | |
| Polymer-5 (parts by mass) | | | | | |
| Polymer-6 (parts by mass) | | | | | |
| MAH-EP (parts by mass) | | 10 | | | |
| SEBS (parts by mass) | | | 10 | | |
| Physical properties | | | | | |
| Tensile test | | | | | |
| Tensile strength (Mpa) | 65 | 53 | 48 | 17 | 52 |
| Elongation at break (%) | 7 | 8 | 5 | 64 | 6 |
| Impact strength (kJ/m²) | 1.5 | 2.1 | 1.8 | 1.7 | 1.5 |
| Bending modulus (Mpa) | 3830 | 2850 | 2540 | 710 | 2610 |
| Appearance when molded | ○ | X | X | X | X |
| Biodegradability | ○ | ○ | ○ | X | ○ |

As is clear from the comparison of Examples and Comparative Examples, there can be obtained, by the present invention, biodegradable (disintegratable) polylactic acid-based resin compositions which maintain tensile properties well and are superior in balance between stiffness and impact resistance as well as in appearance when molded. In contrast, in Comparative Example 1 which is a polylactic acid per se and in Comparative Examples 2 to 5 which deviate from the scope of the present invention, the balance between tensile strength and elongation is inferior and the impact resistance is insufficient. Further, in Comparative Examples 2 to 5, the appearance when molded is inferior.

### Industrial Applicability

The resin composition and molded article thereof according to the present invention are improved in impact resistance without impairing the strength possessed by the polylactic acid and have biodegradability (disintegratability). Owing to these features, they can be used in various applications such as blow-molded articles (e.g. bottle and container), hygienic goods (e.g. paper diaper and sanitary product), medical tools (e.g. suture), packaging materials (e.g. film, sheet, bottle, cup and tray), agricultural materials (e.g. agricultural multi-layered film and sheet), products for ordinary life (e.g. envelope, file case, shopping bag, garbage bag and bag for pet's excrement), and the like.

## Claims

1. A resin composition comprising:
a resin component comprising 50 to 100 parts by mass of (i-1) a polylactic acid and 50 to 0 part by mass of (i-2) a polyolefin [the total of (i-1) and (i-2) is 100 parts by mass], and
1 to 100 parts by mass, per 100 parts by mass of the resin component, of (ii) a functional group-containing, hydrogenated, diene-based polymer containing at least one kind of functional group selected from the group consisting of carboxyl group, acid anhydride group, epoxy group, (meth)acryl group, amino group, alkoxysilyl group, hydroxyl group, isocyanate group and oxazoline group,
wherein the functional group-containing, hydrogenated, diene-based polymer is a hydrogenated, diene-based polymer containing the following polymer block B and the following polymer block A and/or the following polymer block C, in which polymer at least 80% of the double bonds of the conjugated diene portion is hydrogenated.
A: a polymer block containing an aromatic vinyl compound unit in an amount more than 50% by mass.
B: a polymer block containing a conjugated diene compound unit in an amount more than 50% by mass, wherein the content of 1,2- and 3,4-configurations is 30% to 90%.
C: a polymer block containing a conjugated diene compound unit in an amount more than 50% by mass, wherein the content of 1,2- and 3,4-configurations is less than 30%.

2. A resin composition according to Claim 1, wherein the resin component comprises 60 to 100 parts by mass of the polylactic acid (i-1) and 40 to 0 part by mass of the polyolefin (i-2) [the total of (i-1) and (i-2) is 100 parts by mass].

3. A resin composition according to Claims 1 or 2, wherein the functional group of the functional group-containing, hydrogenated, diene-based polymer (ii) includes amino group.

4. A molded article obtained by molding a resin composition set forth in any of Claims 1 to 3.

## Patentansprüche

1. Harzzusammensetzung, die umfasst:
einen Harzbestandteil, der 50 bis 100 Masseteile (i-1) einer Polymilchsäure und 50 bis 0 Masseteile (i-2) eines Polyolefins umfasst [die Gesamtheit von (i-1) und (i-2) ist 100 Masseteile], und
1 bis 100 Masseteile, pro 100 Masseteile des Harzbestandteils, (ii) eines funktionelle Gruppeenthaltenden, hydrierten, Dien-basierten Polymers, das zumindest eine Art einer funktionellen Gruppe ausgewählt aus der Gruppe bestehend aus einer Carboxylgruppe, einer Säureanhydridgruppe, einer Epoxidgruppe, einer (Meth)Acrylgruppe, einer Aminogruppe, einer Alkoxysilylgruppe, einer Hydroxylgruppe, einer Isocyanatgruppe und einer Oxazolingruppe enthält,
wobei das funktionelle Gruppe-enthaltende, hydrierte, Dien-basierte Polymer ein hydriertes, Dienbasiertes Polymer ist, das den folgenden Polymerblock B und den folgenden Polymerblock A und/oder den folgenden Polymerblock C enthält, wobei in dem Polymer zumindest 80% der Doppelbindungen des konjugierten Dienabschnitts hydriert ist.
A: ein Polymerblock, der eine aromatische Vinylverbindungseinheit in einer Menge von mehr als 50 Massen-% enthält.
B: ein Polymerblock, der eine konjugierte Dienverbindungseinheit in einer Menge von mehr als 50 Massen-% enthält, wobei der Gehalt an 1,2- und 3,4-Konfigurationen 30% bis 90% beträgt.
C: ein Polymerblock, der eine konjugierte Dienverbindungseinheit in einer Menge von mehr als 50 Massen-% enthält, wobei der Gehalt an 1,2- und 3,4-Konfigurationen geringer als 30% ist.

2. Harzzusammensetzung nach Anspruch 1, wobei der Harzbestandteil 60 bis 100 Masseteile der Polymilchsäure (i-1) und 40 bis 0 Masseteile des Polyolefins (i-2) umfasst [die Gesamtheit von (i-1) und (i-2) beträgt 100 Masseteile].

3. Harzzusammensetzung nach Anspruch 1 oder 2, wobei die funktionelle Gruppe des funktionelle Gruppeenthaltenden, hydrierten, Dien-basierten Polymers (ii) eine Aminogruppe beinhaltet.

4. Formgegenstand, der durch Formen einer Harzzusammensetzung nach einem der Ansprüche 1 bis 3 erhalten ist.

## Revendications

1. composition de résine comprenant :
un composant de résine comprenant 50 à 100 parties en masse de (i-1) un acide polylactique et 50 à 0 partie(s) en masse de (i-2) une polyoléfine [le total de (i-1) et (i-2) est de 100 parties en masse], et
1 à 100 partie (s) en masse, pour 100 parties en masse du composant de résine, de (ii) un polymère à base de diène, hydrogéné, contenant un groupement fonctionnel, contenant au moins un type de groupement fonctionnel choisi dans le groupe constitué d'un groupe carboxyle, un groupe anhydride d'acide, un groupe époxy, un groupe (meth)acrylique, un groupe amino, un groupe alcoxysilyle, un groupe hydroxyle, un groupe isocyanate et un groupe oxazoline,
dans lequel le polymère à base de diène, hydrogéné, contenant un groupement fonctionnel est un polymère à base de diène, hydrogéné contenant le bloc polymère B suivant et le bloc polymère A suivant et/ou le bloc polymère C suivant, polymère dans lequel au moins 80% des doubles liaisons de la partie diène conjugué est hydrogénée.
A : un bloc polymère contenant un motif de composé vinyle aromatique dans une quantité supérieure à 50% en masse.
B : un bloc polymère contenant un motif de composé diène conjugué dans une quantité supérieure à 50% en masse, dans lequel la teneur des configurations 1,2 et 3,4 est de 30% à 90%.
C : un bloc polymère contenant un motif de composé diène conjugué dans une quantité supérieure à 50% en masse, dans lequel la teneur des configurations 1,2 et 3,4 est inférieure à 30%.

2. Composition de résine selon la revendication 1, dans laquelle le composant de résine comprend 60 à 100 parties en masse de l'acide polylactique (i-1) et 40 à 0 partie(s) en masse de la polyoléfine (i-2) [le total de (i-1) et (i-2) est de 100 parties en masse].

3. Composition de résine selon les revendications 1 ou 2, dans laquelle le polymère à base de diène, hydrogéné, contenant un groupement fonctionnel (ii) inclut un groupe amino.

4. Article moulé obtenu par moulage d'une composition de résine présentée dans l'une quelconque des revendications 1 à 3.
